# EUROPÄISCHE PATENTANMELDUNG

(11) **EP 3 588 277 A1**
(43) Veröffentlichungstag der Anmeldung: **01.01.2020**
(21) Anmeldenummer: 18180895.7
(22) Anmeldetag: 29.06.2018
(51) Int. Cl.: G06F 8/654

(54) **FIRMWARE-AKTUALISIERUNGSVERFAHREN**

(71) Anmelder: Siemens Aktiengesellschaft, 80333 München (DE)
(72) Erfinder: Weiler, Christoph, 75015 Bretten (DE)

(57) **Zusammenfassung**

Vorgeschlagen wird ein Verfahren zur Aktualisierung wenigstens eines Teils einer Firmware eines Gerätekomplexes (1) einer technischen Anlage, insbesondere Produktionsanlage, wobei der Gerätekomplex (1) eine hierarchische Struktur mit wenigstens einem hierarchisch höher angeordneten Gerät (2, 3a, 3b, 3c, 3d, 3e, 3f) und wenigstens einem hierarchisch tiefer angeordneten Gerät (3a, 3b, 3c, 3d, 3e, 3f, 4a, 4b) aufweist. Das Verfahren umfasst die folgenden Schritte:
a) Zusammenstellung eines für den Gerätekomplex (1) und dessen wenigstens zwei Geräten (2, 3a, 3b, 3c, 3d, 3e, 3f, 4a, 4b) passenden Firmwarepaketes (7) mittels einer Aktualisierungseinrichtung (6);
b) Übertragung des Firmwarepaketes (7) an das wenigstens eine hierarchisch höher angeordnete Gerät (2, 3a, 3b, 3c, 3d, 3e, 3f);
c) Ausgehend von dem wenigstens einen hierarchisch höher angeordneten Gerät (2, 3a, 3b, 3c, 3d, 3e, 3f) Verteilung des Firmwarepaketes an das wenigstens eine hierarchisch tiefer angeordnete Gerät (3a, 3b, 3c, 3d, 3e, 3f, 4a, 4b) ;
d) Anwendung des Firmwarepaketes (7) zur Aktualisierung des wenigstens einen hierarchisch höher angeordneten Geräts (2), (3a, 3b, 3c, 3d, 3e, 3f) und des wenigstens einen hierarchisch tiefer angeordneten Geräts (3a, 3b, 3c, 3d, 3e, 3f, 4a, 4b).

## Beschreibung

Die Erfindung betrifft ein Verfahren zur Aktualisierung wenigstens eines Teils einer Firmware eines Gerätekomplexes einer technischen Anlage nach Anspruch 1. Zudem betrifft die Erfindung einen Gerätekomplex einer technischen Anlage nach Anspruch 8.

Aktuelle Gerätekomplexe einer technischen Anlage, vor allem IoT-Gerätekomplexe (IoT = Internet-of-Things), benötigen regelmäßig Updates ihrer Firmware, um funktionale Erweiterungen vornehmen oder Sicherheitslücken schließen zu können. Hierbei ist es üblich, dass jedes einzelne Gerät des Gerätekomplexes bzw. jede einzelne Komponente eines entsprechenden Gerätes individuell aktualisiert wird. Heute werden Geräte / Komponenten gezielt und individuell mit Updates versorgt. Für jedes Gerät bzw. jede Komponente gibt es ein individuelles Firmware-Paket, welches direkt auf das einzelne Gerät bzw. die einzelne Komponente übertragen und dort installiert wird. Dies ist jedoch mit einem hohen Aufwand verbunden.

Die Gerätekomplexe sind oftmals hierarchisch aufgebaut, d.h. übergeordnete Geräte weisen mehrere untergelagerte Geräte bzw. Subkomponenten auf, welchen wiederum weitere Geräte bzw. Komponenten untergelagert sein können. Zwischen den Geräten bzw. Komponenten der unterschiedlichen Ebenen eines Gerätekomplexes besteht in der Regel eine Abhängigkeit, derart, dass Änderungen in der Firmware eines untergelagerten Geräts sich auf das Zusammenspiel mit einem übergelagerten Gerät auswirken. Es muss sichergestellt werden, dass die Firmware-Updates der einzelnen Geräte / Komponenten in einer Form erfolgen, dass nach dem Update der gesamte hierarchisch strukturierte Gerätekomplex wieder korrekt anläuft und funktioniert. Andernfalls kann es bei einer fehlerhaften Aktualisierung der einzelnen Komponenten / Geräte zu Inkonsistenz kommen, die einen weiteren Betrieb des Gerätekomplexes verhindern oder zumindest verzögern können.

In der US 2015/0095899 A1 ist ein Verfahren zur Aktualisierung einer Softwareapplikation beschrieben, bei dem die Aktualisierung ausgehend von einer Subkomponente der Applikation entlang einer hierarchischen Reihenfolgen nach oben hin vorgenommen wird. Dabei werden die Aktualisierungsdaten einzelnen an die einzelnen Komponenten der Softwareapplikation verteilt, was, wie zuvor bereits erläutert, einen enormen Aufwand mit sich bringt.

Der Erfindung liegt die Aufgabe zugrunde, ein Verfahren zur Aktualisierung wenigstens eines Teils einer Firmware eines Gerätekomplexes einer technischen Anlage anzugeben, das mit einem verhältnismäßig geringen Aufwand zuverlässig durchgeführt werden kann.

Die Aufgabe wird gelöst durch ein Verfahren zur Aktualisierung wenigstens eines Teils einer Firmware eines Gerätekomplexes einer technischen Anlage, insbesondere Produktionsanlage, wobei der Gerätekomplex eine hierarchische Struktur mit wenigstens einem hierarchisch höher angeordneten Gerät und wenigstens einem hierarchisch tiefer angeordneten Gerät aufweist, nach Anspruch 1.

Zudem wird die Aufgabe gelöst durch einen Gerätekomplex einer technischen Anlage, insbesondere Produktionsanlage, wobei der Gerätekomplex eine hierarchische Struktur mit wenigstens einem hierarchisch höher angeordneten Gerät und wenigstens einem hierarchisch tiefer angeordneten Gerät aufweist, nach Anspruch 8.

Vorteilhafte Weiterbildungen ergeben sich aus den abhängigen Ansprüchen.

Das Verfahren der eingangs beschriebenen Art umfasst die folgenden Schritte:
a) Zusammenstellung eines für den Gerätekomplex und dessen wenigstens zwei Geräten passenden Firmwarepaketes mittels einer Aktualisierungseinrichtung;
b) Übertragung des Firmwarepaketes an das wenigstens eine hierarchisch höher angeordnete Gerät;
c) Ausgehend von dem wenigstens einen hierarchisch höher angeordneten Gerät Verteilung des Firmwarepaketes an das wenigstens eine hierarchisch tiefer angeordnete Gerät;
d) Anwendung des Firmwarepaketes zur Aktualisierung des wenigstens einen hierarchisch höher angeordneten Geräts und des wenigstens einen hierarchisch tiefer angeordneten Geräts.

Der Begriff "Firmware" ist breit auszulegen und bezeichnet eine Software, die in einem Gerät des Gerätekomplexes eingebettet oder einbettbar ist. Der Begriff "Firmware" umfasst zum Beispiel ein Betriebssystem, das zum Betrieb eines Geräte bzw. einer Komponente dieses Gerätes eingesetzt werden kann. Die Firmware muss jedoch nicht dauerhaft auf dem Gerät installiert sein. Es ist auch möglich, dass die Firmware (Software) während einer Inbetriebnahme des jeweiligen Gerätes neu auf das Gerät übertragen wird. Gegebenenfalls ist die Firmware dabei nur temporär auf dem Gerät vorhanden und wird nach dem Ende des Betriebs des Gerätes wieder von dem Gerät entfernt. Für das erfindungsgemäße Verfahren ist daher nicht essentiell, ob die Geräte des Gerätekomplexes bereits eine Firmware vorinstalliert haben. Der Begriff "Aktualisierung" bedeutet nicht zwingend, dass bereits vor der Durchführung des erfindungsgemäßen Verfahrens auf einem oder mehreren (oder jedem) Gerät eine Firmware vorhanden sein muss.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind. In dem dargestellten Szenario ist jede Anlage mit einem zentralen Datenspeicher außerhalb der Unternehmensinfrastruktur verbunden. Der zentrale Datenspeicher ist hier Teil einer Rechnernetzwerks mit onlinebasierten Speicher- und Serverdiensten, welches üblicherweise auch als "Cloud" (engl. Wolke) oder Cloud-Plattform bezeichnet wird. Die in der Cloud gespeicherten Daten sind online zugänglich, sodass auch die technische Anlage über das Internet Zugriff auf ein zentrales Datenarchiv in der Cloud haben kann.

Ein Gerätekomplex ist eine Menge an technischen Geräten, die im vorliegenden Fall aus wenigstens zwei Geräten besteht. Der Gerätekomplex weist eine hierarchische Struktur auf, die eine Rangfolge der dem Komplex zugeordneten Geräte darstellt. Dabei kann es sich beispielsweise um einen Informationsfluss zwischen den einzelnen Geräten handeln. Ein hierarchisch tiefer angeordnetes Gerät kann beispielsweise ein Sensor sein, der ermittelte Messwerte an ein hierarchisch höher angeordnetes Gerät übermittelt, das als Transmitter ausgebildet ist.

Die einzelnen Geräte des Gerätekomplexes können, müssen aber nicht in einer engen räumlichen Beziehung zueinander stehen. Es ist möglich, dass einzelne Geräte sich nicht in demselben Werk der technischen Anlage befinden, sondern an voneinander getrennten Standorten, die über cloudbasierte Anwendungen miteinander verbunden sind.

Die Aktualisierungseinrichtung kann beispielsweise ein Mikrocontroller sein, der unmittelbar in der industriellen Anlage befindlich ist. Es kann sich aber auch um einen externen Softwaredienst handeln, der auf einem Cloudserver (innerhalb oder außerhalb der technischen Anlage) betrieben wird.

Wesentlich ist, dass das zuvor für den Gerätekomplex zusammengestellte Firmwarepaket an ein einziges Gerät innerhalb des Komplexes übertragen wird. Dieses koordiniert dann die weitere Vergabe an hierarchisch tiefer angeordnete Geräte. Dadurch kann sichergestellt werden, dass eine Aktualisierung der Firmware des Gerätekomplexes effizient, aufwandsarm und sicher vonstattengehen kann. Die Koordinierung kann direkt über von der Aktualisierungseinrichtung vorgegebene Befehle erfolgen, die von dem hierarchisch höher angeordneten Gerät ausgeführt werden. Ein Befehl an einen Transmitter kann beispielsweise lauten: "Verteile das Firmwarepaket an den Sensor A, den Sensor B und den Sensor C". Dabei sind die Sensoren A, B und C dem Transmitter hierarchisch untergeordnet. Das hierarchisch höher angeordnete Gerät kann aber auch einen Teil der für die Verteilungsaufgaben benötigten Befehle selbst bestimmen. So könnte die Aktualisierungseinrichtung dem Transmitter das Firmwarepaket übermitteln und ihm lediglich auftragen, die Firmware an alle Sensoren zu übertragen, die einem bestimmten Typ entsprechen. Der Transmitter kann dann selbst ermitteln, wie viele Sensoren des bestimmten Typs ihm hierarchisch untergeordnet sind, und diesen das Firmwarepaket übermitteln.

Es ist nicht zwingend notwendig, dass es sich bei dem "einen hierarchisch höher angeordneten Gerät" um das hierarchisch am höchsten angeordnete Gerät des Gerätekomplexes handelt. Vielmehr kann das erfindungsgemäße Verfahren auch bei niedrigeren Hierarchieebenen angewandt werden, wenn beispielsweise nur ein Teilbereich des Gerätekomplexes aktualisiert werden soll. Auch ist es möglich, parallel mehrere Geräte des Gerätekomplexes als hierarchisch höher angeordnete Geräte auszuwählen.

Für nähere Erläuterungen hierzu sei auf die Beschreibung der Ausführungsbeispiele verwiesen.

Bevorzugt werden zur Ermittlung der hierarchischen Struktur die folgenden Verfahrensschritte vor den zuvor erläuterten Verfahrensschritten a) bis d) durchgeführt:
a) Ausgehend von der Aktualisierungseinrichtung Herstellung einer informationstechnischen Verbindung zu dem Gerätekomplex;
b) Ermittlung der hierarchischen Struktur des Gerätekomplexes;
c) Übermittlung der hierarchischen Beziehungen an die Aktualisierungseinrichtung.

Mit anderen Worten baut die Aktualisierungseinrichtung eine (Daten-)Verbindung zu dem Gerätekomplex auf und fragt von diesem dessen hierarchische Struktur ab. "Aufbau" meint hierbei nicht zwingend einen kompletten Neuaufbau der Verbindung. Vielmehr kann die (Daten-)Verbindung natürlich bereits physisch bestehen. Die Abfrage der hierarchischen Struktur erfolgt vorteilhafterweise wasserfallartig, d.h. jedes Gerät ermittelt die hierarchisch unmittelbar unter ihm angeordneten Geräte. Diese wiederum verfahren nach gleichem Muster mit ihnen untergeordneten Geräten, bis die unterste Hierarchieebene erreicht worden ist. Die ermittelten Informationen werden dann "nach oben" weitergegeben und an die Aktualisierungseinrichtung übertragen.

Die Abfrage kann bei Bedarf (on demand) dann erfolgen, wenn eine neue Version der Firmware zur Verfügung steht und das Firmwarepaket zusammengestellt werden soll. Es ist aber auch möglich, dass die Aktualisierungseinrichtung in einem regelmäßigen Turnus die aktuellen hierarchischen Beziehungen innerhalb des Gerätekomplexes erfragt, um diese Information bei Bedarf sofort zur Verfügung zu haben. Damit kann einer Verzögerung des Prozesses bei einem zeitweiligen Ausfall der (Daten-)Verbindung zwischen der Aktualisierungseinrichtung und dem Gerätekomplex vorgebeugt werden.

Die Aktualisierungseinrichtung kann die hierarchische Struktur des Gerätekomplexes einer Datenbank der technischen Anlage entnehmen, wobei die Datenbank vorzugsweise cloudbasiert ausgebildet ist. Die Entnahme der hierarchischen Struktur kann alternativ zur zuvor erläuterten direkten Ermittlung aus dem Gerätekomplex erfolgen. Es ist aber auch möglich, die entsprechenden Daten aus der Datenbank zu entnehmen und mit neu ermittelten Daten aus dem Gerätekomplex zu vergleichen, um mögliche Änderungen erkennen zu können und in einem zweiten Schritt prüfen zu können, ob die Änderungen auch beabsichtigt sind.

Bei einer vorteilhaften Weiterbildung der Erfindung nimmt das hierarchisch höher angeordnete Gerät eine Filterung des von der Aktualisierungseinrichtung erhaltenen Firmwarepaketes vor. Die Filterung erfolgt dabei dahingehend, dass das hierarchisch höher angeordnete Gerät prüft, welcher Teil des Firmwarepaketes für das wenigstens eine hierarchisch tiefer angeordnete Gerät vorgesehen ist. Anschließend übermittelt das wenigstens eine hierarchisch höher angeordnete Gerät ausschließlich den gefilterten Teil des Firmwarepaketes an das wenigstens eine hierarchisch tiefer angeordnete Gerät.

Besonders bevorzugt wird das wenigstens eine hierarchisch tiefer angeordnete Geräts zeitlich gesehen vor dem wenigstens einen hierarchisch höher angeordneten Gerät aktualisiert. Dabei übermittelt das wenigstens eine hierarchisch tiefer angeordnete Gerät eine Meldung an das wenigstens eine hierarchisch höher angeordnete Gerät, dahingehend, dass mittels der Meldung das wenigstens eine hierarchisch höher angeordnete Gerät darüber informiert wird, ob die Anwendung des Firmwarepaketes zur Aktualisierung der Firmware des wenigstens einen hierarchisch tiefer angeordneten Geräts ordnungsgemäß abgeschlossen worden ist. Sobald das hierarchisch höher angeordnete Gerät die positive Erledigungsmeldung von dem hierarchisch tiefer angeordneten Gerät erhalten hat, kann das hierarchisch höher angeordnete Gerät mit der Aktualisierung seiner Firmware beginnen. Durch diese Weiterbildung der Erfindung ist in besonderem Maße sichergestellt, dass die Aktualisierung der Firmware der einzelnen Geräte des Gerätekomplexes zuverlässig vonstattengeht.

Vorteilhafterweise leitet das hierarchisch höher angeordnete Gerät die von dem wenigstens einen hierarchisch tiefer angeordneten Gerät empfangene Meldung an die Aktualisierungseinrichtung und/oder an weitere hierarchisch höher angeordnete Geräte weiter, damit auch diese eine Rückmeldung über den Status der Aktualisierung der einzelnen Geräte erhalten.

Für den Fall, dass die Anwendung des Firmwarepaketes zur Aktualisierung der Firmware des wenigstens einen hierarchisch tiefer angeordneten Geräts nicht ordnungsgemäß abgeschlossen worden ist, kann das wenigstens eine hierarchisch höher angeordnete Gerät und/oder die Aktualisierungseinrichtung eine Anweisung an das wenigstens eine hierarchisch tiefer angeordnete Gerät übermitteln. Die Anweisung zielt dabei darauf ab, dass das wenigstens eine hierarchisch tiefer angeordnete Gerät die Anwendung des Firmwarepaketes zur Aktualisierung der Firmware des wenigstens einen hierarchisch tiefer angeordneten Geräts rückgängig macht, um den fehlerhaften Zustand zu beenden.

Die Aufgabe wird zudem gelöst durch einen Gerätekomplex einer technischen Anlage, insbesondere Produktionsanlage, wobei der Gerätekomplex eine hierarchische Struktur mit wenigstens einem hierarchisch höher angeordneten Gerät und wenigstens einem hierarchisch tiefer angeordneten Gerät aufweist. Der Gerätekomplex ist dadurch gekennzeichnet, dass eine Firmware wenigstens eines Teils des Gerätekomplexes wenigstens einmal gemäß einem zuvor erläuterten Verfahren aktualisiert worden ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: einen Gerätekomplex in einem Prinzipschaubild;
- FIG 2: ein Firmwarepaket zur Aktualisierung des in Figur 1 dargestellten Gerätekomplexes; und
- FIG 3: ein Ablaufdiagramm für einen Aktualisierungsvorgang des Gerätekomplexes gemäß FIG 1.

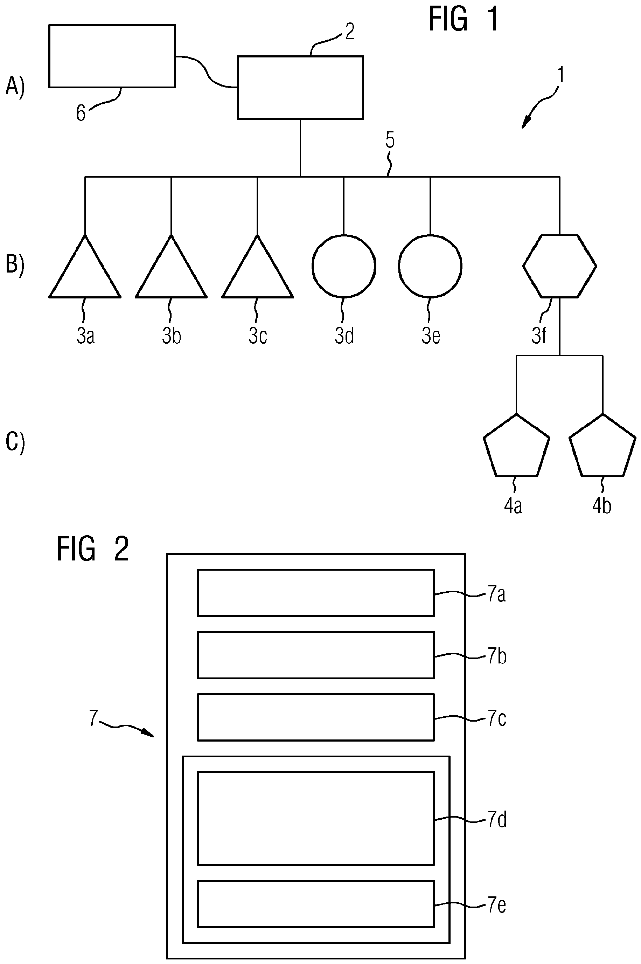

FIG 1 zeigt ein Prinzipschaubild eines Gerätekomplexes 1. Der Gerätekomplex 1 weist drei Hierarchieebenen A, B, C auf. In der ersten Hierarchieebene A befindet sich ein Transmitter 2. In der zweiten Hierarchieebene B befinden sich drei Sensoren 3a, 3b, 3c des Typs I, zwei Sensoren 3d, 3e des Typs II und ein Sensor 3f des Typs III. In der dritten Hierarchieebene C befinden sich zwei digitale Messaufnehmer 4a, 4b, die speziell für den Sensor 3f des Typs III vorgesehen sind.

Die einzelnen Geräten 2, 3a, 3b, 3c, 3d, 3e, 3f, 4a, 4b sind mittels Datenleitungen 5 verbunden, die einen Datenaustausch zwischen den Geräten 2, 3a, 3b, 3c, 3d, 3e, 3f, 4a, 4b ermöglichen. Es kann sich dabei um drahtgebundene oder drahtlose Verbindungen 5 handeln.

Im Rahmen des Ausführungsbeispiels übertragen die Geräte 3a, 3b, 3c, 3d, 3e, 3f, 4a, 4b jeweils eine eindeutige Kennung an den Transmitter 2 als hierarchisch am höchsten angeordnete Komponente des Gerätekomplexes 1. Der Transmitter 2 leitet die Informationen über die hierarchische Struktur des Gerätekomplexes 1 an eine als cloudbasierter Dienst ausgebildete Aktualisierungseinrichtung 6 weiter. Der cloudbasierte Dienst 6 ist auf einem Server im Rahmen einer Cloudumgebung ausführbar.

Mithilfe der an ihn übertragenen hierarchischen Struktur des Gerätekomplexes 1 erstellt die Aktualisierungseinrichtung 6 ein passendes Firmwarepaket 7, das zur Aktualisierung der Firmware der Geräte 2, 3a, 3b, 3c, 3d, 3e, 3f, 4a, 4b des Gerätekomplexes 1 vorgesehen ist. In FIG 2 ist der Aufbau des Firmwarepaketes 7 dargestellt. Er umfasst ein Firmwareteilpaket 7a für den Transmitter 2, ein Firmwareteilpaket 7b für die Sensoren vom Typ I, ein Firmwareteilpaket 7c für die Sensoren vom Typ II, ein Firmwareteilpaket 7d für die Sensoren vom Typ III und ein Firmwareteilpaket 7e für die digitalen Messaufnehmer 4a, 4b.

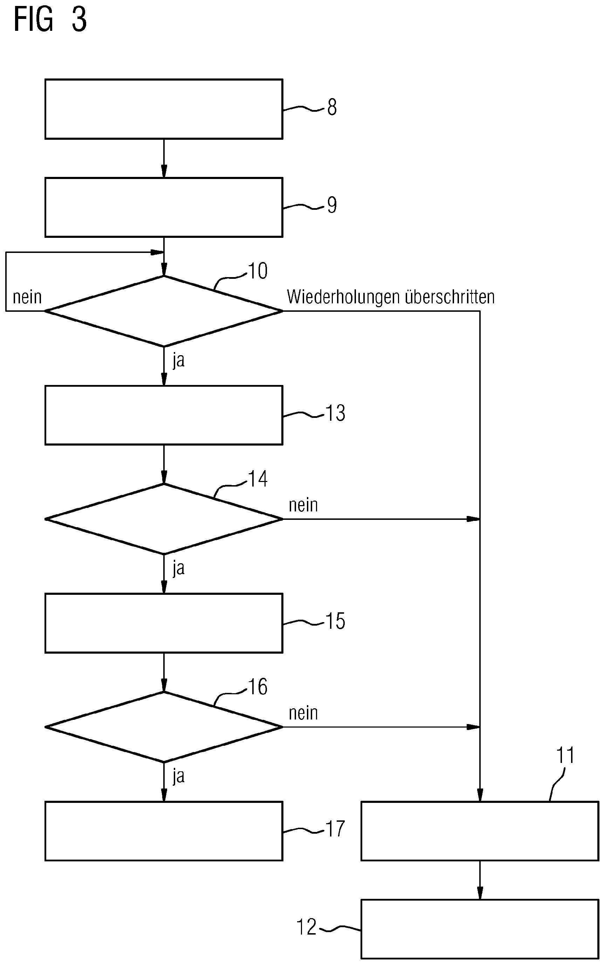

Nach der Zusammenstellung des Firmwarepaketes 7 wird dieses an den Transmitter 2 als hierarchisch höher als die Sensoren 3a, 3b, 3c, 3d, 3e, 3f und die Messaufnehmer 4a, 4b angeordnetes Gerät übertragen. FIG 3 zeigt die weiteren Schritte, die nach dem Empfang des Firmwarepaketes 7 innerhalb des Gerätekomplexes 1 ausgeführt werden.

In einem ersten Schritt 8 wird das Firmwarepaket 7 von dem Transmitter 2 in die einzelnen Firmwareteilpakete 7a, 7b, 7c, 7d, 7e zerlegt.

Im darauffolgenden zweiten Schritt 9 werden die Firmwareteilpakete 7a, 7b, 7c, 7d, 7e ausgehend von dem Transmitter 2 an die einzelnen Geräte 3a, 3b, 3c, 3d, 3e, 3f, 4a, 4b übertragen. Dabei nimmt der Transmitter 2 als hierarchisch höher angeordnetes Gerät eine Filterung des von der Aktualisierungseinrichtung 6 erhaltenen Firmwarepaketes 7 bzw. dessen Firmwareteilpaketen 7a, 7b, 7c, 7d, 7e vor. Die Informationen darüber, welches Gerät 3a, 3b, 3c, 3d, 3e, 3f, 4a, 4b welches Firmwareteilpaket 7a, 7b, 7c, 7d, 7e erhalten soll, ist dem übermittelten Firmwarepaket 7 von der Aktualisierungseinrichtung 6 beigefügt worden.

In einem dritten Schritt 10 senden alle Geräte 3a, 3b, 3c, 3d, 3e, 3f, 4a, 4b eine Bestätigung an den Transmitter 2, dass sie die entsprechenden Firmwareteilpakete 7a, 7b, 7c, 7d, 7e empfangen haben. Für den Fall, dass nicht von allen Geräten 3a, 3b, 3c, 3d, 3e, 3f, 4a, 4b eine derartige Bestätigung vorliegt, übermittelt der Transmitter 2 nach Ablauf einer bestimmten Zeit erneut die Firmwareteilpakete 7a, 7b, 7c, 7d, 7e an die Geräte 3a, 3b, 3c, 3d, 3e, 3f, 4a, 4b. Wenn eine bestimmte Anzahl an Wiederholungen der Übermittlung der Firmwareteilpakete 7a, 7b, 7c, 7d, 7e überschritten ist, führt dies zu einem Abbruch 11 der Aktualisierung. Der Transmitter 2 sendet dabei eine Fehlermeldung 12 an die Aktualisierungseinrichtung 6.

Für den Fall, dass dem Transmitter 2 von allen Geräten 3a, 3b, 3c, 3d, 3e, 3f, 4a, 4b eine derartige Bestätigung vorliegt, kommt es in einem vierten Schritt 13 zu einer Aktualisierungsfreigabe für alle dem Transmitter 2 untergeordneten Geräte 3a, 3b, 3c, 3d, 3e, 3f, 4a, 4b.

In einem fünften Schritt 14 wird von jedem Gerät 2, 3a, 3b, 3c, 3d, 3e, 3f, geprüft, ob alle Aktualisierungen der jeweiligen Firmware der jeweils untergeordneten Geräte 3a, 3b, 3c, 3d, 3e, 3f, 4a, 4b erfolgreich vorgenommen worden sind. Ist dies nicht der Fall, führt dies zu einem Abbruch 11 der Aktualisierung. Der Transmitter 2 sendet dabei eine Fehlermeldung 12 an die Aktualisierungseinrichtung 6.

Wenn alle Aktualisierungen der jeweiligen Firmware der jeweils untergeordneten Geräte 3a, 3b, 3c, 3d, 3e, 3f, 4a, 4b erfolgreich vorgenommen worden sind, führt das hierarchisch höher angeordnete Gerät 2, 3a, 3b, 3c, 3d, 3e, 3f in einem sechsten Schritt 15 eine Aktualisierung der eigenen Firmware durch.

In einem siebten Schritt 16 prüft das hierarchisch am höchsten angeordnete Gerät 2, hier der Transmitter 2, ob seine Aktualisierung der Firmware erfolgreich vorgenommen worden ist. Ist dies nicht der Fall, führt dies zu einem Abbruch 11 der Aktualisierung. Der Transmitter 2 sendet dabei eine Fehlermeldung 12 an die Aktualisierungseinrichtung 6.

Wenn die Aktualisierung der eigenen Firmware des Transmitters 2 erfolgreich vorgenommen worden ist, sendet der Transmitter 2 eine Mitteilung 17 an die Aktualisierungseinrichtung 6, darüber, dass die Aktualisierung der Firmware des Gerätekomplexes 1 erfolgreich abgeschlossen worden ist.

Der beschriebene erfindungsgemäße Aktualisierungsvorgang ist mit einem deutlich verringerten Zeitaufwand im Vergleich zu bislang bekannten Verfahren verbunden. gleichzeitig kann die Gefahr manueller Fehler bei der Aktualisierung deutlich reduziert werden. Insgesamt lässt sich dadurch eine Aktualisierungsrate für eine Firmware eines Gerätekomplexes 1 deutlich erhöhen, ohne einen signifikanten Mehraufwand zu erzeugen.

Obwohl die Erfindung im Detail durch das bevorzugte Ausführungsbeispiel näher illustriert und beschrieben wurde, so ist die Erfindung nicht durch das offenbarte Beispiel eingeschränkt, und andere Variationen können vom Fachmann hieraus abgeleitet werden, ohne den Schutzumfang der Erfindung zu verlassen.

## Patentansprüche

1. Verfahren zur Aktualisierung wenigstens eines Teils einer Firmware eines Gerätekomplexes (1) einer technischen Anlage, insbesondere Produktionsanlage, wobei der Gerätekomplex (1) eine hierarchische Struktur mit wenigstens einem hierarchisch höher angeordneten Gerät (2, 3a, 3b, 3c, 3d, 3e, 3f) und wenigstens einem hierarchisch tiefer angeordneten Gerät (3a, 3b, 3c, 3d, 3e, 3f, 4a, 4b) aufweist, umfassend:
a) Zusammenstellung eines für den Gerätekomplex (1) und dessen wenigstens zwei Geräten (2, 3a, 3b, 3c, 3d, 3e, 3f, 4a, 4b) passenden Firmwarepaketes (7) mittels einer Aktualisierungseinrichtung (6);
b) Übertragung des Firmwarepaketes (7) an das wenigstens eine hierarchisch höher angeordnete Gerät (2, 3a, 3b, 3c, 3d, 3e, 3f);
c) Ausgehend von dem wenigstens einen hierarchisch höher angeordneten Gerät (2, 3a, 3b, 3c, 3d, 3e, 3f) Verteilung des Firmwarepaketes an das wenigstens eine hierarchisch tiefer angeordnete Gerät (3a, 3b, 3c, 3d, 3e, 3f, 4a, 4b) ;
d) Anwendung des Firmwarepaketes (7) zur Aktualisierung des wenigstens einen hierarchisch höher angeordneten Geräts (2), (3a, 3b, 3c, 3d, 3e, 3f) und des wenigstens einen hierarchisch tiefer angeordneten Geräts (3a, 3b, 3c, 3d, 3e, 3f, 4a, 4b).

2. Verfahren nach Anspruch 1, bei dem zur Ermittlung der hierarchischen Struktur des Gerätekomplexes (1) die folgenden Verfahrensschritte vor den Verfahrensschritten gemäß Anspruch 1 durchgeführt werden:
a) Ausgehend von der Aktualisierungseinrichtung (6) Herstellung einer informationstechnischen Verbindung zu dem Gerätekomplex (1);
b) Ermittlung der hierarchischen Struktur des Gerätekomplexes (1) ;
c) Übermittlung der hierarchischen Beziehungen an die Aktualisierungseinrichtung (6).

3. Verfahren nach Anspruch 1, bei dem die Aktualisierungseinrichtung (6) die hierarchische Struktur des Gerätekomplexes (1) einer Datenbank der technischen Anlage entnimmt, wobei die Datenbank vorzugsweise cloudbasiert ausgebildet ist.

4. Verfahren nach einem der vorangegangenen Ansprüche, bei dem das hierarchisch höher angeordnete Gerät (2, 3a, 3b, 3c, 3d, 3e, 3f) eine Filterung des von der Aktualisierungseinrichtung (6) erhaltenen Firmwarepaketes (7) vornimmt, dahingehend, welcher Teil des Firmwarepaketes (7) für das wenigstens eine hierarchisch tiefer angeordnete Gerät (3a, 3b, 3c, 3d, 3e, 3f, 4a, 4b) vorgesehen ist, und bei dem das wenigstens eine hierarchisch höher angeordnete Gerät (2, 3a, 3b, 3c, 3d, 3e, 3f) ausschließlich den gefilterten Teil des Firmwarepaketes (7) an das wenigstens eine hierarchisch tiefer angeordnete Gerät (3a, 3b, 3c, 3d, 3e, 3f, 4a, 4b) übermittelt.

5. Verfahren nach einem der vorangegangenen Ansprüche, bei dem das wenigstens eine hierarchisch tiefer angeordnete Gerät (3a, 3b, 3c, 3d, 3e, 3f, 4a, 4b) zeitlich gesehen vor dem wenigstens einen hierarchisch höher angeordneten Gerät (2, 3a, 3b, 3c, 3d, 3e, 3f) aktualisiert wird, und bei dem das wenigstens eine hierarchisch tiefer angeordnete Gerät (3a, 3b, 3c, 3d, 3e, 3f, 4a, 4b) eine Meldung an das wenigstens eine hierarchisch höher angeordnete Gerät (2, 3a, 3b, 3c, 3d, 3e, 3f) übermittelt, dahingehend, dass mittels der Meldung das wenigstens eine hierarchisch höher angeordnete Gerät (2, 3a, 3b, 3c, 3d, 3e, 3f) darüber informiert wird, ob die Anwendung des Firmwarepaketes (7) zur Aktualisierung der Firmware des wenigstens einen hierarchisch tiefer angeordneten Geräts (3a, 3b, 3c, 3d, 3e, 3f, 4a, 4b) ordnungsgemäß abgeschlossen worden ist.

6. Verfahren nach Anspruch 5, bei dem das wenigstens eine hierarchisch höher angeordnete Gerät (2, 3a, 3b, 3c, 3d, 3e, 3f) die von dem wenigstens einen hierarchisch tiefer angeordneten Gerät (3a, 3b, 3c, 3d, 3e, 3f, 4a, 4b) empfangene Meldung an die Aktualisierungseinrichtung (6) und/oder an weitere hierarchisch höher angeordnete Geräte (2, 3a, 3b, 3c, 3d, 3e, 3f) weiterleitet.

7. Verfahren nach Anspruch 5 oder 6, bei dem im Fall, dass die Anwendung des Firmwarepaketes (7) zur Aktualisierung der Firmware des wenigstens einen hierarchisch tiefer angeordneten Geräts nicht ordnungsgemäß abgeschlossen worden ist, das wenigstens eine hierarchisch höher angeordnete Gerät (2, 3a, 3b, 3c, 3d, 3e, 3f) und/oder die Aktualisierungseinrichtung eine Anweisung an das wenigstens eine hierarchisch tiefer angeordnete Gerät (3a, 3b, 3c, 3d, 3e, 3f, 4a, 4b) übermittelt, dahingehend, dass das wenigstens eine hierarchisch tiefer angeordnete Gerät (3a, 3b, 3c, 3d, 3e, 3f, 4a, 4b) die Anwendung des Firmwarepaketes (7) zur Aktualisierung der Firmware des wenigstens einen hierarchisch tiefer angeordneten Geräts (3a, 3b, 3c, 3d, 3e, 3f, 4a, 4b) rückgängig macht.

8. Gerätekomplex (1) einer technischen Anlage, insbesondere Produktionsanlage, wobei der Gerätekomplex (1) eine hierarchische Struktur mit wenigstens einem hierarchisch höher angeordneten Gerät (2, 3a, 3b, 3c, 3d, 3e, 3f) und wenigstens einem hierarchisch tiefer angeordneten Gerät (3a, 3b, 3c, 3d, 3e, 3f, 4a, 4b) aufweist,
**dadurch gekennzeichnet, dass**
eine Firmware wenigstens eines Teils des Gerätekomplexes (1) wenigstens einmal gemäß einem Verfahren der Ansprüche 1 bis 7 aktualisiert worden ist.
